# EUROPÄISCHE PATENTANMELDUNG

(11) **EP 1 288 676 A1**
(43) Veröffentlichungstag der Anmeldung: **05.03.2003**
(21) Anmeldenummer: 02017085.8
(22) Anmeldetag: 29.07.2002
(51) Int. Cl.: G01S 17/10

(54) **Optoelektronische Entfernungsmesseinrichtung**

(30) Priorität: 03.09.2001 DE 10143061
(71) Anmelder: Sick AG, 79183 Waldkirch, Breisgau (DE)
(72) Erfinder: Hipp, Johann, 22931 Hamburg (DE); Gorris, Fried, 22946 Trittau (DE)
(74) Vertreter: Manitz, Finsterwald & Partner GbR

(57) **Zusammenfassung**

Die Erfindung betrifft eine optoelektronische Entfernungsmeßeinrichtung, insbesondere einen Laserscanner, mit wenigstens einer Sendeeinheit zur Aussendung gepulster elektromagnetischer Strahlung, zumindest einer der Sendeeinheit zugeordneten Empfangseinheit zum Empfang der reflektierten Strahlung und einer Auswerteeinrichtung zur Bestimmung der Entfernung von die ausgesandte Strahlung reflektierenden Objekten nach einem Pulslaufzeitmeßverfahren, wobei die Auswerteeinrichtung wenigstens zwei parallele Laufzeitmeßkanäle umfaßt und derart ausgebildet ist, daß von zwei insbesondere auf derselben Signalleitung nacheinander einlaufenden Empfangspulsen desselben Sendepulses der frühere Empfangspuls in dem einen Meßkanal und der spätere Empfangspuls in dem anderen Meßkanal zumindest hinsichtlich der Laufzeit auswertbar ist.

## Beschreibung

Die Erfindung betrifft eine optoelektronische Entfernungsmeßeinrichtung, insbesondere einen Laserscanner, mit wenigstens einer Sendeeinheit zur Aussendung gepulster elektromagnetischer Strahlung, zumindest einer der Sendeeinheit zugeordneten Empfangseinheit zum Empfang der reflektierten Strahlung und einer Auswerteeinrichtung zur Bestimmung der Entfernung von die ausgesandte Strahlung reflektierenden Objekten nach einem Pulslaufzeitmeßverfahren.

Derartige Erfassungseinrichtungen sind grundsätzlich bekannt und werden beispielsweise an Fahrzeugen angebracht, um während der Fahrt die Umgebung des Fahrzeugs zu erfassen.

Wegen der endlichen Ausdehnung des Sendepulses können Doppelechos, d.h. zeitlich gestaffelte Echos oder Reflexionen, auftreten, wenn ein vorderes Objekt nur teilweise von dem auch als Lichtfleck bezeichneten Sendepuls getroffen wird oder für die verwendete Strahlung durchlässig ist, so daß noch eine ausreichende Strahlungsmenge von einem hinteren, sich in einer größeren Entfernung befindlichen Objekt reflektiert wird. In diesen Fällen hat ein Sendepuls zwei Empfangspulse zur Folge, die zeitlich nacheinander auf die Empfangseinheit auftreffen.

Bei dem ersten oder vorderen Objekt kann es sich z.B. um einen Regentropfen, eine Schneeflocke oder um Sägespäne in einem Sägewerk handeln. Sind diese Objekte für die jeweilige Anwendung nicht von Interesse, so stören sie die Auswertung des späteren, von dem eigentlich interessierenden Objekt, z.B. einem vorausfahrenden Fahrzeug oder einem Baumstamm in einem Sägewerk, stammenden Empfangspulses. In anderen Fällen können auch die vorderen Objekte von Interesse sein, um z.B. Aussagen über die Umgebungsverhältnisse der Meßeinrichtung zu erhalten, wobei allerdings Informationen über die weiter entfernten Objekte nichtsdestoweniger benötigt werden.

Aufgabe der Erfindung ist es, eine optoelektronische Entfernungsmeßeinrichtung der eingangs genannten Art zu schaffen, mit der möglichst viele Informationen aus der reflektierten Strahlung eines ausgesandten Sendepulses gewonnen und insbesondere mehrere zeitlich gestaffelte Empfangspulse des Sendepulses mit möglichst hoher Genauigkeit und insbesondere unabhängig voneinander ausgewertet werden können.

Die Lösung dieser Aufgabe erfolgt durch die Merkmale des Anspruchs 1 und insbesondere dadurch, daß die Auswerteeinrichtung wenigstens zwei parallele Laufzeitmeßkanäle umfaßt und derart ausgebildet ist, daß von zwei insbesondere auf derselben Signalleitung nacheinander einlaufenden Empfangspulsen desselben Sendepulses der frühere Empfangspuls in dem einen Meßkanal und der spätere Empfangspuls in dem anderen Meßkanal zumindest hinsichtlich der Laufzeit auswertbar ist.

Erfindungsgemäß sind wenigstens zwei parallele Empfangskanäle vorgesehen. Hierdurch können zeitlich nacheinander einlaufende Empfangspulse desselben Sendepulses mit hoher Genauigkeit und unabhängig voneinander ausgewertet werden. Dies ist insbesondere für auf derselben Signalleitung zeitlich nacheinander einlaufende Empfangspulse möglich.

Vorzugsweise kann mittels eines automatischen Umschaltvorgangs von dem zur Auswertung des früheren Empfangspulses vorgesehen einen Meßkanal auf den zur Auswertung des späteren Empfangspulses vorgesehenen anderen Meßkanal umgeschaltet werden.

Hierdurch wird automatisch dafür gesorgt, daß der spätere Empfangspuls in einen anderen Meßkanal gelangt als der frühere Empfangspuls und dieser die Auswerteeinrichtung nicht blockiert.

Besonders bevorzugt ist es, wenn der Umschaltvorgang mittels des früheren Empfangspulses ausgelöst wird.

Hierbei ist es der frühere Empfangspuls selbst, der dafür sorgt, daß er die Auswerteeinrichtung für den späteren Empfangspuls nicht blockiert, sondern gewissermaßen den Weg in den anderen Meßkanal "frei macht".

Vorzugsweise ist die erfindungsgemäße Einrichtung derart ausgebildet, daß mittels des Sendepulses in beiden Meßkanälen Zeitmessungen gestartet werden, wobei Zeitmessungen in dem einen Meßkanal mittels des früheren Empfangspulses und in dem anderen Meßkanal mittels des späteren Empfangspulses beendet werden können.

Dabei ist es bevorzugt, wenn in jedem Meßkanal mittels der Vorderflanke und der Hinterflanke des Sendepulses jeweils eine Zeitmessung gestartet wird, wobei die frühere Zeitmessung mittels der Vorderflanke des betreffenden Empfangspulses und mittels dessen Hinterflanke die spätere Zeitmessung beendet wird.

Um die Zeitmessungen zu starten und zu beenden, ist vorzugsweise vorgesehen, daß in der Auswerteeinrichtung mittels der Pulsflanken des Startpulses und der Empfangspulse Gates geöffnet und geschlossen werden. Dies erfolgt insbesondere in einer Logikeinheit der Auswerteeinrichtung.

Bevorzugt ist zur Auswertung der Breiten der Gates ein Time-to-Analog-Wandler vorgesehen. Die den gemessenen Zeiten entsprechenden Gate-Breiten werden hierdurch zur weiteren Verarbeitung in analoge Signale umgewandelt.

Dem Time-to-Analog-Wandler sind vorzugsweise ein Analog/Digital-Wandler sowie ein mit diesem verbundener Mikroprozessor nachgeordnet, mit dem aus den gemessenen Pulslaufzeiten die Entfernungen, aus denen die Empfangspulse reflektiert wurden, bestimmt werden.

Grundsätzlich ist die erfindungsgemäße Verwendung mehrerer paralleler Meßkanäle auf beliebig viele Empfangspulse desselben Sendepulses anwendbar. In Abhängigkeit von der erwarteten oder für die jeweilige Anwendung benötigten Anzahl von Empfangspulsen kann dabei für jeden Empfangspuls ein separater Meßkanal vorgesehen werden.

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: Sende- und Empfangspulse sowie daraus gebildete Gates einer optoelektronischen Entfernungsmeßeinrichtung gemäß einer Ausführungsform der Erfindung,
- Fig. 2: das Schaltbild für eine Empfangseinheit und einen Teil einer Auswerteeinrichtung einer optoelektronischen Entfernungsmeßeinrichtung gemäß einer Ausführungsform der Erfindung,
- Fig. 3: eine schematische Darstellung einer Auswerteeinrichtung einer optoelektronischen Entfernungsmeßeinrichtung gemäß einer Ausführungsform der Erfindung.

Bei der erfindungsgemäßen optoelektronischen Entfernungsmeßeinrichtung handelt es sich bevorzugt um einen Laserscanner, der in einer oder mehreren Abtastebenen gepulste elektromagnetische Strahlung in einen Überwachungsbereich aussendet und von im Überwachungsbereich befindlichen Objekten reflektierte Strahlung empfängt. Die Sendeeinheit umfaßt als Strahlungsquelle eine Laserdiode und eine Strahlungsumlenkeinrichtung in Form eines rotierenden Spiegels. Der Sichtbereich eines derartigen Scanners beträgt bis zu 360°. Für jede Abtastebene ist als Empfänger eine Photodiode, insbesondere eine APD (Avalanche Photo Diode) vorgesehen. Innerhalb jeder Abtastebene mißt der Scanner für jede Richtung, in die ein Sendepuls ausgesandt wird, neben der Entfernung zu einem oder mehreren Objekten (worauf im folgenden näher eingegangen wird) auch den Winkel bezogen auf eine vorgegebene Achse.

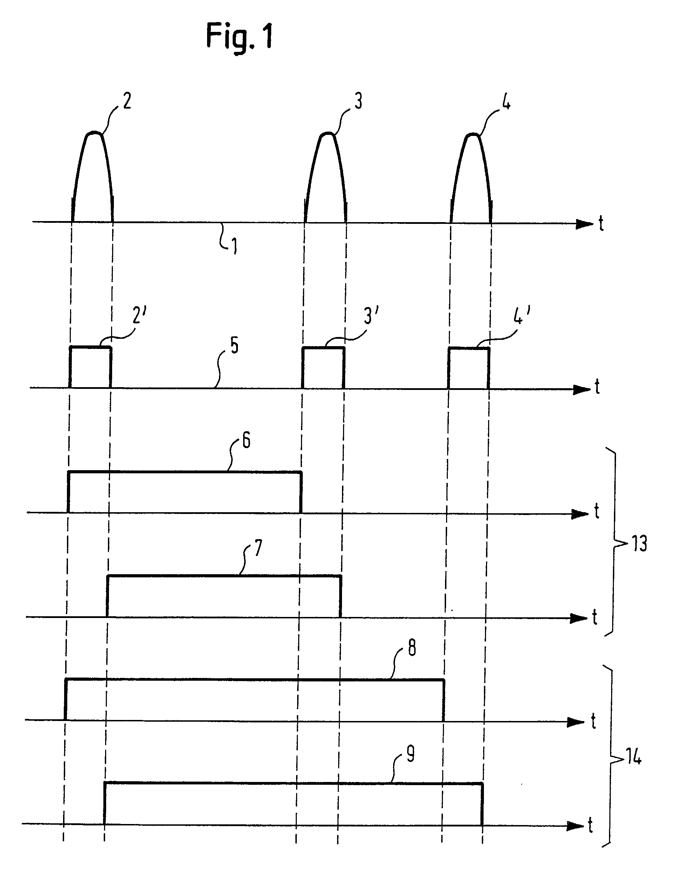

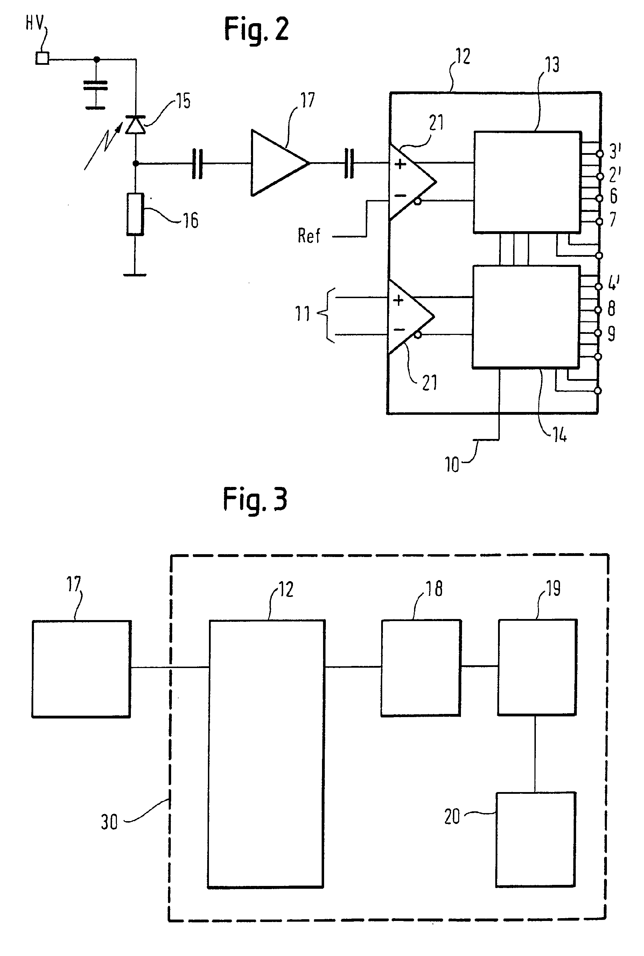

Fig. 1 zeigt - von oben nach unten - am Beispiel einer Abtastebene des Scanners zunächst das von der mit einem Lastwiderstand 16 in Reihe geschalteten Photodiode 15 (vgl. Fig. 2) sowie einem nachgeschalteten Verstärker 17 gelieferte analoge Empfangssignal 1, das zwei Empfangspulse 3, 4 umfaßt, die zu von der Entfernung der betreffenden Objekte, von denen die Strahlung jeweils reflektiert wurde, abhängigen Zeiten nach dem Aussenden des Sendepulses 2 empfangen werden.

Mittels eines eine vorgegebene Referenzspannung aufweisenden Komparators 21 werden die Pulse digitalisiert. Der Komparator 21 sowie zwei separate, parallele Meßmodule 13, 14 sind Bestandteile einer Logikeinheit 12 einer Auswerteeinrichtung 30 (vgl. Fig. 3) des Scanners. Die Meßmodule 13, 14 bilden zwei parallele Meßkanäle der Auswerteeinrichtung.

Der digitalisierte Sendepuls 2' startet in beiden Meßmodulen 13, 14 jeweils zwei Zeitmessungen, indem sowohl mittels seiner Vorderflanke als auch mittels seiner Hinterflanke Gates 6, 7, 8, 9 geöffnet werden.

Die digitalisierten Empfangspulse 3', 4' gelangen zeitlich nacheinander in das eine Meßmodul 13. Der frühere Empfangspuls 3' beendet in diesem Meßmodul 13 mit seiner Vorderflanke die zuerst und mit seiner Hinterflanke die zuletzt begonnene Zeitmessung durch Schließen der entsprechenden Gates 6, 7.

Außerdem wird durch die Hinterflanke des früheren Empfangspulses 3' ein Umschaltvorgang ausgelöst, wodurch bewirkt wird, daß nachfolgende Pulsflanken auf das andere Meßmodul 14 einwirken. Folglich werden die nach dem Eintreffen des früheren Empfangspulses 3' noch offenen Gates 8, 9 im anderen Meßmodul 14 durch die Vorderflanke und die Hinterflanke des späteren Empfangspulses 4' geschlossen, d.h. die bis dahin jeweils noch weiter gelaufenen Zeitmessungen in diesem zweiten Meßkanal 14 also ebenfalls beendet.

Hierdurch wird gewissermaßen der spätere Empfangspuls 4' durch den früheren Empfangspuls 3' auf den anderen Meßkanal 14 umgeleitet, um die dort laufenden Zeitmessungen zu beenden.

Das Resultat sind folglich vier Gate-Breiten, d.h. vier Zeiten, aus denen die Laufzeiten der Empfangspulse 3, 4 bestimmt werden können. Hierzu umfaßt die Auswerteeinrichtung 30 einen der Logikeinheit 12 nachgeordneten Time-to-Analog-Wandler (TAC) 18 (vgl. Fig. 3), mit dem die den Gate-Breiten entsprechenden Zeiten zunächst in analoge Signale umgewandelt werden, aus denen anschließend mittels eines Analog/Digital-Wandlers mit einem nachgeordneten Mikroprozessor 20 verarbeitbare digitale Signale erzeugt werden.

Für jeden Meßkanal 13, 14 berechnet der Mikroprozessor 20 die Laufzeit des betreffenden Empfangspulses 3, 4 - und damit die Entfernung zu dem jeweiligen Objekt, an dem die Reflexion des Sendepulses 2 erfolgte - aus der halben Summe der betreffenden Gate-Breiten.

Erfindungsgemäß können somit für jeden einzelnen Sendepuls 2, d.h. für jeden "Schuß" des Scanners, die Entfernungen von zwei gestaffelt angeordneten Objekten, an denen dieser Sendepuls 2 zeitlich nacheinander reflektiert wird, durch unabhängiges Auswerten der betreffenden, zeitlich nacheinander einlaufenden Empfangspulse 3, 4 bestimmt werden.

In Fig. 2 ist lediglich beispielhaft ein weiterer Eingang 11 dargestellt, der von einem weiteren, mit dem anderen Meßmodul 14 verbundenen Komparator 21 gebildet ist. In einer bevorzugten Ausführung sendet der erfindungsgemäße Laserscanner Strahlung in mehreren und insbesondere in vier Abtastebenen aus, wobei für jede Abtastebene eine Empfangseinheit mit einer Photodiode 15 und einem Verstärker 17 vorgesehen ist. An den Eingang 11 kann eine derartige weitere zweite Empfangseinheit angeschlossen werden.

Das andere Meßmodul 14 weist ferner einen Select-Eingang 10 auf, mit dem die erfindungsgemäße Funktion zur Messung von gestaffelt einlaufenden Doppelpulsen auf die Funktion von zwei parallel arbeitenden, unabhängigen Entfernungsmessern zur Messung des jeweils ersten Echopulses umgeschaltet werden kann.

### Bezugszeichenliste

- 1: analoges Empfangssignal
- 2/2': analoger/digitalisierter Sendepuls
- 3/3': analoger/digitalisierter früher Empfangspuls
- 4/4': analoger/digitalisierter später Empfangspuls
- 5: digitales Empfangssignal
- 6, 7, 8, 9: Gate
- 10: Select-Eingang
- 11: Eingang für weitere Entfernungsmeßeinrichtung
- 12: Logikeinheit
- 13: Modul für ersten Meßkanal
- 14: Modul für zweiten Meßkanal
- 15: Photodiode (APD)
- 16: Lastwiderstand
- 17: Verstärker
- 18: Time-to-Analog-Wandler (TAC)
- 19: Analog/Digital-Wandler (ADC)
- 20: Mikroprozessor
- 21: Komparator
- 30: Auswerteeinrichtung

## Patentansprüche

1. Optoelektronische Entfernungsmeßeinrichtung, insbesondere Laserscanner, mit
- wenigstens einer Sendeeinheit zur Aussendung gepulster elektromagnetischer Strahlung,
- zumindest einer der Sendeeinheit zugeordneten Empfangseinheit (15, 16) zum Empfang der reflektierten Strahlung und
- einer Auswerteeinrichtung (30) zur Bestimmung der Entfernung von die ausgesandte Strahlung reflektierenden Objekten nach einem Pulslaufzeitmeßverfahren,
wobei die Auswerteeinrichtung (30) wenigstens zwei parallele Laufzeitmeßkanäle (13, 14) umfaßt und derart ausgebildet ist, daß von zwei insbesondere auf derselben Signalleitung nacheinander einlaufenden Empfangspulsen (3, 3', 4, 4') desselben Sendepulses (2, 2') der frühere Empfangspuls (3, 3') in dem einen Meßkanal (13) und der spätere Empfangspuls (4, 4') in dem anderen Meßkanal (14) zumindest hinsichtlich der Laufzeit auswertbar ist.

2. Einrichtung nach Anspruch 1,
**dadurch gekennzeichnet,**
**daß** mittels eines automatischen Umschaltvorgangs von dem zur Auswertung des früheren Empfangspulses (3, 3') vorgesehen einen Meßkanal (13) auf den zur Auswertung des späteren Empfangspulses (4, 4') vorgesehenen anderen Meßkanal (14) umschaltbar ist.

3. Einrichtung nach Anspruch 2,
**dadurch gekennzeichnet,**
**daß** der Umschaltvorgang mittels des früheren Empfangspulses (3, 3') auslösbar ist.

4. Einrichtung nach einem der vorhergehenden Ansprüche,
**dadurch gekennzeichnet,**
**daß** mittels des Sendepulses (2, 2') in beiden Meßkanälen (13, 14) Zeitmessungen startbar sind, wobei Zeitmessungen in dem einen Meßkanal (13) mittels des früheren Empfangspulses (3, 3') und in dem anderen Meßkanal (14) mittels des späteren Empfangspulses (4, 4') beendbar sind.

5. Einrichtung nach Anspruch 4,
**dadurch gekennzeichnet,**
**daß** in jedem Meßkanal (13, 14) mittels der Vorderflanke und der Hinterflanke des Sendepulses (2, 2') jeweils eine Zeitmessung startbar ist, wobei die frühere Zeitmessung mittels der Vorderflanke des betreffenden Empfangspulses (3, 3', 4, 4') und mittels dessen Hinterflanke die spätere Zeitmessung beendbar ist.

6. Einrichtung nach Anspruch 4 oder 5,
**dadurch gekennzeichnet,**
**daß** für die Zeitmessungen in der Auswerteeinrichtung (30), insbesondere in einer Logikeinheit (12), das Öffnen und Schließen von Gates (6, 7, 8, 9) mittels der Pulsflanken des Startpulses (2, 2') und der Empfangspulse (3, 3', 4, 4') vorgesehen ist.

7. Einrichtung nach einem der vorhergehenden Ansprüche,
**dadurch gekennzeichnet,**
**daß** zur Auswertung der Breiten der Gates (6, 7, 8, 9) ein Time-to-Analog-Wandler (18) vorgesehen ist.

8. Einrichtung nach einem der vorhergehenden Ansprüche,
**dadurch gekennzeichnet,**
**daß** dem Time-to-Analog-Wandler (18) ein Analog/Digital-Wandler (19) und ein mit diesem verbundener Mikroprozessor (20) zur Bestimmung der Entfernungen aus den gemessenen Pulslaufzeiten nachgeordnet sind.
